# EUROPEAN PATENT SPECIFICATION

(11) **EP 1 327 544 B1**
(45) Date of publication and mention of the grant of the patent: **06.06.2007**
(21) Application number: 03000317.2
(22) Date of filing: 09.01.2003
(51) Int. Cl.: B60J 1/00, B60J 1/17

(54) **A system and method for adjusting and fixing the inclination of the sliding guides of a side door window in a motor vehicle**
Vorrichtung und Verfahren zur Einstellung und Fixierung der Neigung der Laufführung eines Seitenfensters in einem Motorfahrzeug
Système et methode pour régler et fixer l'inclination des rails de guidage d'une vitre de porte latérale d'un véhicule à moteur

(30) Priority: 14.01.2002 IT TO20020039
(43) Date of publication of application: 16.07.2003
(73) Proprietor: COMAU S.p.A., 10095 Grugliasco (Torino) (IT)
(72) Inventor: Molina, Guiseppe, 10029 Villastellone (Torino) (IT); Bigando, Mauro, 10136 Torino (IT)
(74) Representative: Fioravanti, Corrado

(56) References cited:
- EP-A- 0 626 283
- EP-A- 0 699 548
- DE-A- 3 823 087
- US-A- 5 632 121
- PATENT ABSTRACTS OF JAPAN vol. 1999, no. 01, 29 January 1999 (1999-01-29) & JP 10 287129 A (NIFCO INC), 27 October 1998 (1998-10-27)
- PATENT ABSTRACTS OF JAPAN vol. 1997, no. 01, 31 January 1997 (1997-01-31) & JP 08 244461 A (MAZDA MOTOR CORP), 24 September 1996 (1996-09-24)

## Description

The invention relates to a system and method for adjusting and fixing the inclination of the sliding guides of a side door window in a motor vehicle. The invention is intended to apply in particular to the doors of motor vehicles having "frameless" windows where the window opening is not defined at the top or the side by an edge of the door frame which normally cooperates to guide the sliding movement of the glass panel.

EP-A-0 626 283 discloses a motor vehicle door with a system for adjusting and fixing the inclination of the guides for a glass panel, as defined in the preamble of claim 1.

As is known, the windows slide along pairs of parallel guides fixed to the door structure. In order that the glass, when completely raised, precisely closes the window opening defined at the top by the roof (which may open) of the motor vehicle, it is essential for the sliding guides to be inclined at a precise angle relative to a longitudinal vertical plane and to a transverse vertical plane.

As used here, terms and expressions indicating orientations and directions such as "longitudinal", "transverse" and "vertical" refer to the state as installed in a motor vehicle. Thus, for example, the expression "inner side" indicates a side facing towards the passenger compartment, and the expression "outer side" indicates the side facing towards the outside of the motor vehicle.

According to the state of the art, each sliding guide is locked at the desired inclination by means of a securing device carried by the framework of the door. This securing device comprises a locknut and a micrometer screw which allows adjustment in a transverse direction of the lower foot of the sliding guide thus determining the inclination of the guide.

The operations of adjusting and fixing the inclination of the guides, according to the state of the art, are somewhat complicated and lengthy and require the use of particularly skilled labour. Access to the securing device is generally through a hole specially made in the inner skin panel facing the passenger compartment. The operator requires a first Allen wrench to adjust the micrometer screw and a second hexagonal head wrench to tighten the locknut once the desired inclination has been found. The operation is complicated by the fact that, as will be understood, for the adjustment of each guide the operator has to use both hands, and can therefore adjust only one guide at a time.

The invention is therefore intended to produce a system and a method for adjusting and fixing the inclination of the guides of the type specified above, a principal aim being to address the problem of reducing the times and therefore the costs involved in such operations.

Another purpose of the invention is to allow simultaneous adjustment of both sliding guides for the same glass panel in a door of a motor vehicle.

These and other objects and advantages, which will be more clearly understood herein after, are achieved according to a first aspect of the invention by a motor vehicle door comprising a system for adjusting and fixing the guides of a window as defined in claim 1.

According to another aspect of the invention, these objects are achieved by a method for adjusting and fixing the guides of a window in a door of a motor vehicle as defined in claim 11.

Preferred forms of embodiment of the invention are defined in the dependent claims.

A description will now be given of the structural and functional characteristics of two preferred but non-limiting forms of embodiment of the invention, with reference to the appended drawings in which:
figure 1 is a schematic view in partial vertical cross-section of a motor vehicle door with a light alloy die-cast framework in which a first form of embodiment of the invention is used;
figure 2 is a view in vertical longitudinal section along the line II-II in figure 1;
figures 3 and 4 are respective schematic perspective views of a an adjustment and temporary fixing device to be used for a door of the type illustrated in figures 1 and 2;
figures 5, 6 and 7 are plan views from above, respectively in three different adjustment positions, in the direction indicated by the arrow C in figure 1;
figure 8 is a schematic view in partial vertical cross-section of a motor vehicle door with a sheet metal framework in which the second form of embodiment of the invention is used;
figure 9 is a view in vertical section along the line IX-IX in figure 8;
figure 10 is a schematic perspective view of a variant of an adjustment and temporary fixing device to be used for a door of the type illustrated in figure 8; and
figures 11, 12 and 13 are plan views from above, respectively in three different adjustment positions, in the direction indicated by the arrow D in figure 8.

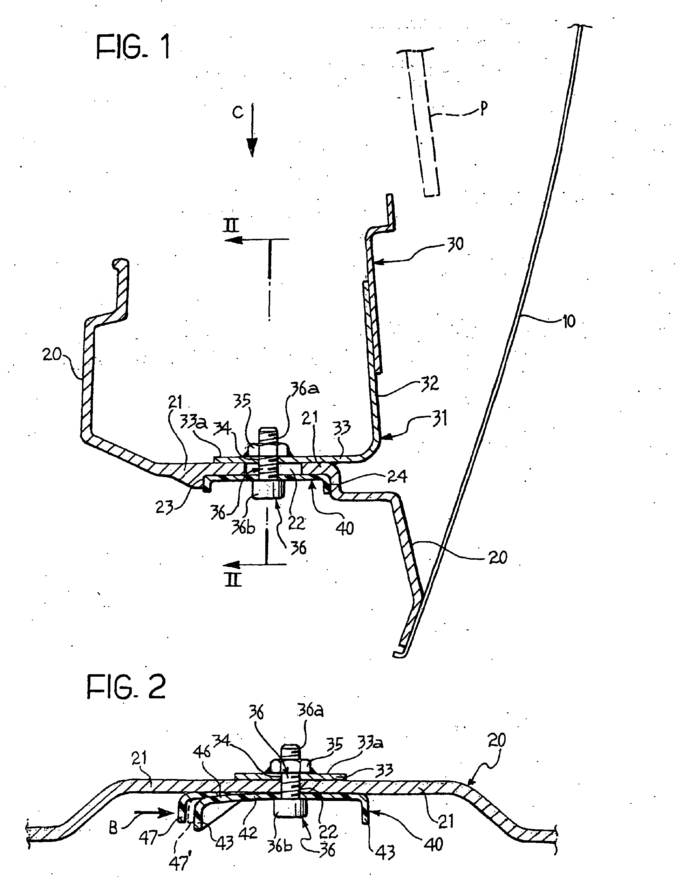

Referring initially to figure 1, a door for a motor vehicle comprises an outer skin 10 and an inner framework 20 of the type obtained by die-casting light alloys, for example magnesium and/or aluminium alloys. The number 30 indicates schematically the lower part of one of the two parallel sliding guides for a panel of glass indicated schematically P. Welded to the foot of the guide 30 is a metal bracket 31 having an L-shaped cross-section comprising a vertical plate portion 32 welded to the guide 30 and a lower horizontal plate portion 33. A vertical hole 34 is made in this horizontal plate portion 33, and in line with this, on the upper surface 33a of the plate portion 33, a threaded nut 35 is welded or otherwise secured.

The framework 20 of the door forms a substantially horizontal bottom wall 21 in which a transversely elongated slit 22 is made.

In an intermediate assembly condition, the guide 30 is attached loosely to the door structure at a higher point (not shown) so that it is able to swing to a limited extent in a transverse vertical plane and allow the foot of the guide 30 to move transversely and therefore the inclination of the guide to be adjusted; by swinging the guide transversely, the hole 34 can be moved facing along the transverse slit 22 formed in the framework 20.

The framework 20 of the door has a rib obtained by die-casting, projecting downwards from the bottom wall 21. This rib is machined so as to form accurately a pair of substantially vertical opposing surfaces 23, 24. The surface 23 is located further towards the inside of the vehicle relative to the transverse slit 22, while the surface 24 is arranged towards the outside relative to the slit 22.

A clamping bolt 36 is connected beforehand to an adjustment and temporary locking device, indicated as a whole by the number 40 and described in detail below. The shank 36a of the bolt 36 is inserted through the transverse slit 22 in the framework, through the hole 34 in the bracket; the bolt 36 is then screwed into the threaded hole of the nut 35 but not tightened.

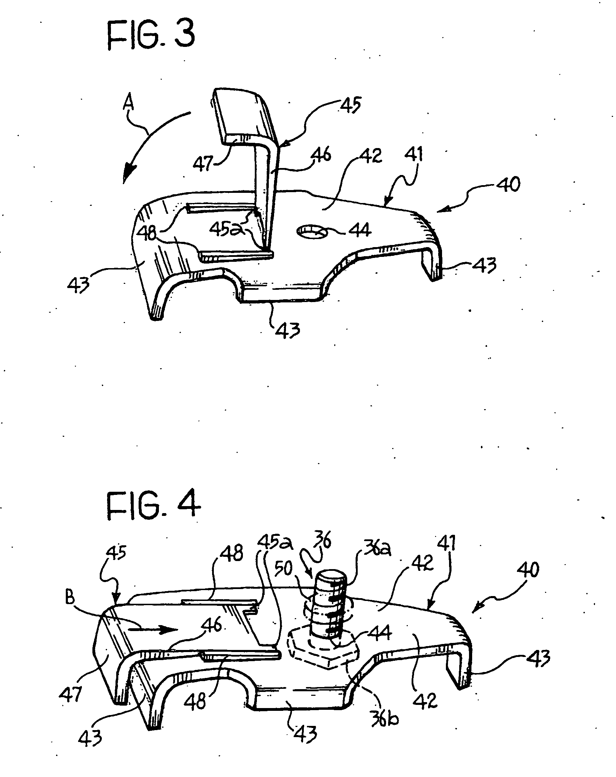

Referring now to figures 3 and 4, an adjustment and temporary locking device 40 comprises a main body 41 comprising a substantially flat base 42 and a plurality of peripheral tabs 43 projecting at right angles from the base portion 42. A circular hole 44 is made in the base portion 42, in a substantially central position, with a diameter corresponding to that of the shank of the bolt 36.

The device 40 also comprises a wedge element 45 comprising a wedge portion 46 and a tab 47 arranged at an angle relative to the wedge portion 46. The wedge portion 46 is preferably configured at an acute angle of about 5°.

The device 40 is of plastics material, preferably nylon, moulded in one piece in the form shown in figure 3. The wedge element 45 projects perpendicularly from the main body 41 and is joined to it by means of two attachment points 45a.

The shank 36a of the clamping bolt 36 is inserted into the hole 44 from the side (the underside) of the base 42 opposite the one from which the wedge element 45 projects. The bolt 36, inserted into the device 40, is placed under the bottom wall 21 of the framework. To prevent the bolt from accidentally slipping out of the hole 44 during these steps, a washer 50 of plastics material, preferably nylon, which holds the bolt by its shank 36a is placed on the upper face of the base 42; the washer 50 is shown schematically in figure 4 only.

The wedge element 45 is bent by forcing it towards the base 42 as indicated by the arrow A in figure 3 and reaches the position shown in figure 4.

This same sequence of operations is also carried out at the same time for the second sliding guide (not shown) where the door and the guide are completely similar in structure to what is shown in figure 1. For the second guide, too, the relevant clamping bolt is positioned by means of a second device 40 completely identical to the one illustrated in figures 3 and 4. The description which follows will therefore be given almost exclusively with reference to only one of the two sliding guides of the glass panel, it being understood that the part not described is to be considered identical or substantially identical to the one described.

As shown in figure 2, the base 42 of the device 40 is in contact with the lower surface of the bottom wall 21 of the framework; the wedge portion 46 is interposed between the bottom wall 21 and the base 42 of the main body 41 in the initial position shown in full line in figure 2. The tabs 43 opposite each other on the main body 41 are gripped and the device 40 is rotated in a plane parallel to that of the bottom wall 21 to cause one of the peripheral tabs 43 to engage with one of the opposing vertical surfaces 23, 24 of the framework 20 (figure 1). Due to the effect of this rotation and of the contact of a tab 43 with one of the surfaces 23 or 24, the bolt 36 moves in horizontal translational motion along the transverse slit 22, pulling with it the foot of the guide 30 and varying the inclination of the guide.

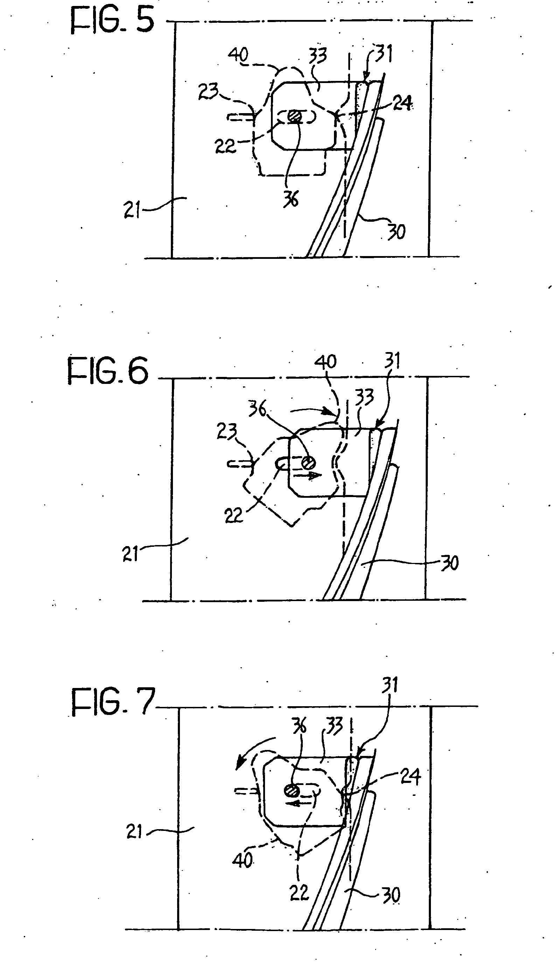

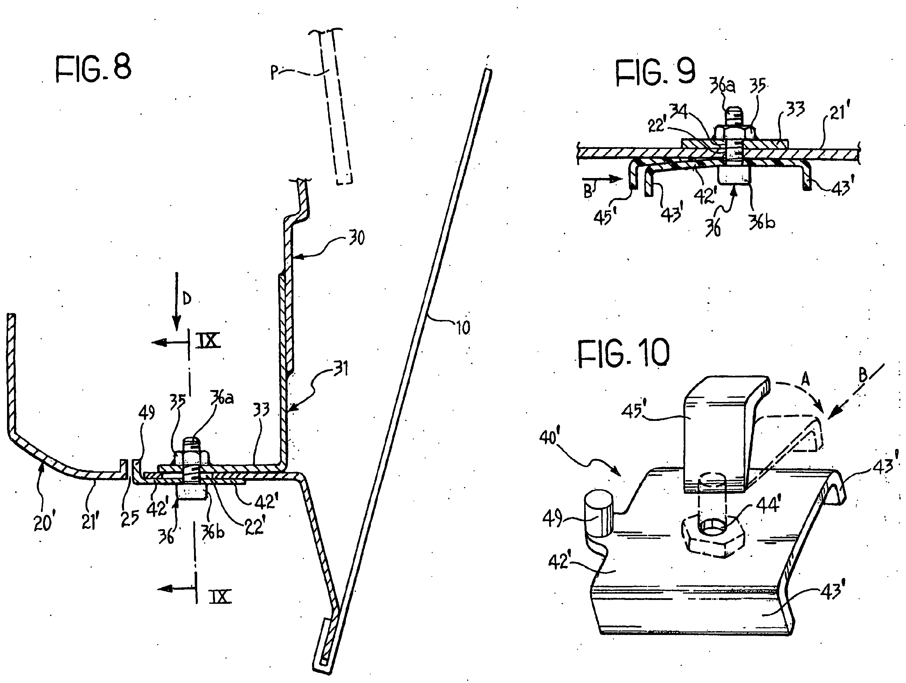

Figures 5, 6 and 7 show schematically three different possible transverse positions which the guide 30 with the bracket 31 may assume relative to the bottom wall 21 of the door framework. In figure 5, the bolt 36 occupies a practically central position in the transverse slit 22 in the door. In figure 6, the device 40 is rotated clockwise and, due to the effect of engaging with the resisting surface 23, the bolt 36 with the nut 35, the bracket 31 and the foot of the guide 30 are moved in translational motion to the right. Similarly, in figure 7 the device 40 is rotated anti-clockwise and, due to the effect of engaging with the resisting surface 24, the bolt 36 with the nut 35, the bracket 31 and the foot of the guide 30 are moved in translational motion to the left.

In this step, the operator adjusts the inclination of one guide with his left hand and the inclination of the second guide with his right hand. When the desired inclination of the glass panel and therefore of the guides is achieved, the position of these is temporarily locked by pushing the wedge element 45 towards the clamping bolt 36; the operator presses on the tab 47, moving it to the position shown as 47' in figure 2 as indicated by the arrow B. In this way, the attachment points 45a break off and the wedge element 45 separates from the main body 41. By being pushed in direction B, the wedge portion 46 becomes wedged between the bottom wall 21 of the framework and the base 42 of the main body 41 of the device 40. This wedging action pushes the base 42 downwards. The latter thereby pulls the head 36b of the bolt 36 downwards, and the bolt, being screwed into the nut 35, presses the plate portion 33 against the upper face of the bottom wall 21 of the framework. The guide 30 is thus kept temporarily locked at the desired inclination by the effect of the friction at the interface between the plate portion 33 and the bottom wall 21.

At this point the bolt 36 may be tightened with a tool, thus securing the guide 30 at the desired inclination.

Preferably a pair of parallel ridges 48 is formed on the base 42 of the main body 41 of the device 40, these serving to guide the wedge element 45 in its movement indicated by the arrow B in figure 4, and preventing the wedge element 45 from accidentally slipping out during the rotation by means of which the bolt 36 moves transversely along the transverse slit 22.

Referring now to figures 8-13, a second form of embodiment of the invention is shown, applied to a motor vehicle door with a sheet metal framework. In this form of embodiment, parts and elements identical or corresponding to those already described with reference to figures 1-7 are designated by the same reference numbers, with the addition of a dash (').

The framework 20' of sheet metal has a horizontal bottom wall 21' in which are made a transverse slit 22' and a curved slit 25 whose centre (or centres) of curvature C falls outside the transverse slit 22'.

An adjustment device 40', shown separately in figure 9, comprises a substantially flat base 42' with peripheral tabs 43' to be gripped by hand and a substantially central hole 44'. From the upper face of the base 42 in an off-centre position relative to the hole 44', there extends an integral vertical pin formation 49 capable of engaging in the curved slit 25. The number 45' indicates a wedge element similar to that already described and shown in figures 3 and 4.

Unlike the doors with a die-cast framework of the type shown in figure 1, the bottom wall 21' in figure 8 is of substantially flat sheet metal and therefore has no projecting surfaces of the type indicated by 23 and 24 in figure 1. As has been seen, these surfaces act as resisting elements which cooperate with the device 40 to cause translational motion of the clamping bolt 36 along the transverse slit 22 when, following the rotation imparted to the device 40, at least one of the tabs 43 of this engages at least one of the surfaces 23 or 24, thus producing a "cam" action. In the variant in figures 8-13, a "cam" effect completely equivalent to the one discussed above is obtained as a result of the eccentric geometrical configuration of the curved slit 25 relative to the transverse hole 22'.

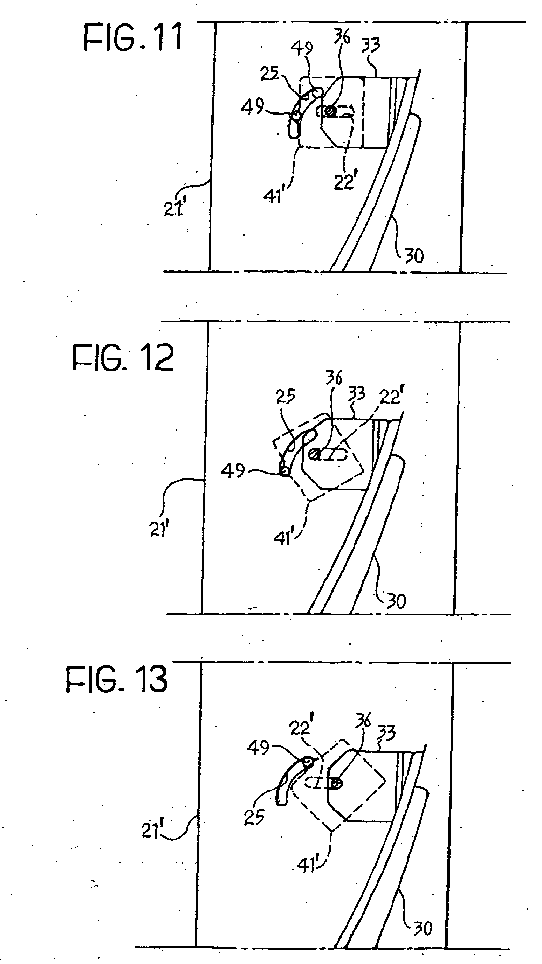

With the pin formation 49 engaged in the curved slit 25 and the bolt 36 engaged in the transverse slit 22' and screwed into the nut 35 (but not yet tightened), the operator, gripping the device 40' by the lower tabs 43', rotates it in a plane parallel to the bottom wall 21'. As shown more clearly in figures 11, 12 and 13, to each angular position of the adjustment device 40' there corresponds a position of the pin formation 49 in the curved slit 25 and therefore a different transverse position of the bolt 36 along the transverse slit 22'. As for the embodiment described above, once the desired inclination of the guides has been found, a wedge element 45' is pressed between the upper surface of the base 42' and the lower surface of the bottom wall 21', obtaining the temporarily locking of the guides at the desired angle of inclination. Finally the bolt 36 is tightened, thus holding the guides firmly in their correct positions.

As will be appreciated, the present invention enables the times required for adjusting the inclination of the guides to be considerably reduced. It also avoids the need to make holes in the inner skin panel of the door and then close them off with blanking plugs. The presence of the openings 22, 22' and 25 in the bottom wall of the door may also be advantageous in favouring the drainage of any water entering the door.

The invention is not limited to the embodiments described and shown here, which are to be considered as examples of operation of the system and of the adjustment and fixing method. Indeed, the invention may be varied regarding the form and arrangements of parts and details of construction and operation. For example, despite the fact that configurations are shown which provide for rotation of the securing device 40, 40' which, cooperating with resisting surfaces in the door, causes the clamping bolt 36 to move in translational motion with a cam effect which allows particularly accurate adjustments, alternatively it is possible to bring about this translational motion by moving the device 40, 40' linearly along the transverse slit without causing it to rotate and therefore without providing resisting surfaces in the door framework, such as those indicated by 23, 24 and 25 in the examples shown.

## Claims

1. A motor vehicle door with a system for adjusting and fixing the inclination of the sliding guides for a glass panel, the door comprising:
- a framework (20, 20') which forms a substantially horizontal lower wall (21, 21') with a substantially transverse slit (22, 22');
- a pair of parallel sliding guides (30) for a glass panel (P) wherein the foot of each guide is integral with a plate portion (33) facing said lower wall (21, 21') of the door framework and wherein the plate portion carries a threaded nut (35) in line with a hole (34) formed in said plate portion (33);
- a clamping bolt (36) having its shank (36a) inserted through the slit (22, 22') and engaged in the nut (35), the head (36b) of the bolt being arranged below the plate portion (21, 21');
**characterised by**
- a wedge means (45, 45') acting between the head (36b) of the bolt and the nut (35) to lock the plate portion (33) temporarily against said lower wall (21, 21') in a selected position which corresponds to the desired inclination of the guide (30).

2. A motor vehicle door according to claim 1, wherein the wedge means (45, 45') are associated with a body (41, 41') having a base portion (42, 42') placed between the head (36b) of the bolt (36) and the lower wall (21, 21') of the door framework, in which the base portion (42, 42') has a through hole (44, 44') with dimensions corresponding to those of the cross-section of the shank (36a) of the bolt.

3. A motor vehicle door according to claim 2, wherein the wedge means (45, 45') are inserted between said base portion (42, 42') of the body (41, 41') and the lower wall (21, 21') of the door framework.

4. A motor vehicle door according to claim 2, wherein the body (41, 41') has at least one substantially vertical surface (43; 49) capable of cooperating to produce a cam action with at least one substantially vertical resisting surface (23, 24; 25) formed in the lower wall (21, 21'), whereby rotation of the body (41, 41') causes translational motion of the bolt (36) along the transverse slit (22, 22') and therefore transverse movement of the foot of the guide (30) with consequent adjustment of the inclination of the guide.

5. A motor vehicle door according to claim 4, wherein the door framework (20) is obtained by die-casting and said at least one substantially vertical surface (23, 24) is presented by a corresponding formation projecting downwards from the lower wall (21) of the door framework.

6. A motor vehicle door according to claim 5, wherein the lower wall (21) of the door framework (20) forms a pair of substantially vertical surfaces (23, 24) on opposite sides relative to the transverse slit (22).

7. A motor vehicle door according to claim 4, wherein the body (41, 41') has a plurality of peripheral tabs (43, 43') projecting downwards from the base portion (42, 42').

8. A motor vehicle door according to claim 4, wherein the body (41, 41') is formed in one piece with a wedge element (45, 45') projecting from the body (41) and joined to it by means of at least one breakable attachment point (45a).

9. A motor vehicle door according to claim 8, wherein the attachment point (45a) joins the body (41) at the thinner end of the wedge element (45).

10. A motor vehicle door according to claim 4, wherein:
- the door framework (20') is of sheet metal;
- said at least one substantially vertical resisting surface is presented by a curved slit (25) having a centre or centres of curvature (C) which falls/fall outside a transverse slit (22'); and
- the substantially vertical surface of the body (41') is presented by a pin formation (49) at a distance from the through hole (44') and capable of engaging slidably in the curved slit (25).

11. A method for adjusting and fixing the inclination of the sliding guides for a glass panel in the door of a motor vehicle, comprising the steps of:
a) providing a door with a framework (20, 20') which forms a substantially horizontal lower wall (21, 21') with a substantially transverse slit (22, 22');
b) providing a pair of parallel sliding guides (30) for a glass panel (P), in which the foot of each guide is integral with a plate portion (33) facing said lower wall (21, 21') of the door framework and the plate portion carries a threaded nut (35) in line with a hole (34) formed in the plate portion (33);
c) inserting the shank (36a) of a clamping bolt (36) through the slit (22, 22') and screwing the shank into the nut (35), the head (36b) of the bolt being arranged below the plate portion (21, 21');
d) moving the bolt (36) transversely along the transverse slit (22, 22') to bring the plate portion (33) into a selected transverse position which corresponds to the desired inclination of the guide (30);
e) pressing a wedge means (45, 45') into an intermediate position between the head (36b) of the bolt and the nut (35) to lock the plate portion (33) temporarily against said lower wall (21, 21') in said selected position; and
f) tightening the bolt (36) in the nut (35) to lock the plate portion (33) firmly against said lower wall (21, 21') in said selected position.

12. A method according to claim 11, wherein step c) is preceded by the steps of:
- providing a body (41, 41') having a base portion (42, 42') with a through hole (44, 44') with dimensions corresponding to those of the cross-section of the shank (36a) of the bolt:
- inserting the bolt into the through hole (44, 44') of the base portion (42, 42'); and
- placing the base portion (42, 42') between the head (36b) of the bolt (36) and the lower wall (21, 21') of the door framework.

13. A method according to claim 12, further comprising the steps of:
- providing in the body (41, 41') at least one substantially vertical surface (43; 49) at a distance from the through hole (44, 44');
- providing at least one substantially vertical resisting surface (23, 24; 25) in the lower wall (21, 21') of the door framework (20, 20');
- rotating in a substantially horizontal plane the body (41, 41') whereby said at least one substantially vertical surface (43, 49) of the body (41, 41') cooperates in a cam relationship with said at least one substantially vertical resisting surface (23, 24; 25) of the door causing said translational motion of the bolt (36) along the transverse slit (22, 22') and said transverse movement of the foot of the guide (30) with consequent adjustment of the inclination of the guide.

14. A method according to claim 12, further comprising the steps of:
- providing the wedge means (45, 45') formed to project from the body and joined to it by at least one attachment point (45a); and
- manually bending (A) the wedge means (45, 45') towards the base portion (42, 42') of the body (41, 41') and breaking off said attachment point (45a).

## Patentansprüche

1. Tür für ein Kraftfahrzeug mit einem System zum Einstellen und Fixieren der Neigung der Gleitführungen für eine Glasscheibe, wobei die Tür enthält:
- einen Rahmen (20, 20'), der eine im Wesentlichen horizontale untere Wand (21, 21') mit einem im Wesentlichen quer verlaufenden Schlitz (22, 22') bildet;
- ein Paar von parallelen Gleitführungen (30) für eine Glasplatte (P), wobei der Fuß einer jeden Führung mit einem Plattenteil (33) integriert ist, der zur unteren Wand (21, 21') des Türrahmens gerichtet ist, und wobei der Plattenteil eine Gewindemutter (35) trägt, die mit einer Öffnung (34) fluchtend ausgerichtet ist, die im Plattenteil (33) ausgebildet ist;
- eine Feststellschraube (36), deren Schaft (36a) durch den Schlitz (22, 22') eingesetzt wird und die mit der Mutter (35) im Eingriff steht, wobei der Kopf (36b) der Schraube unterhalb des Plattenteils (21, 21') angeordnet ist;
**gekennzeichnet durch**
- eine Keileinrichtung (45, 45'), die zwischen dem Kopf (36b) der Schraube und der Mutter (35) wirkt, um den Plattenteil (33) vorübergehend gegen die untere Wand (21, 21') in einer ausgewählten Stellung zu verriegeln, die der gewünschten Neigung der Führung (30) entspricht.

2. Tür für ein Kraftfahrzeug gemäß Anspruch 1, wobei die Keileinrichtung (45, 45') einem Körper (41, 41') zugeordnet ist, der einen Basisteil (42, 42') besitzt, der zwischen dem Kopf (36b) der Schraube (36) und der unteren Wand (21, 21') des Türrahmens angeordnet ist, wobei der Basisteil (42, 42') eine Durchgangsöffnung (44, 44') besitzt, deren Abmessungen den Abmessungen des Querschnitts des Schafts (36a) der Schraube entsprechen.

3. Tür für ein Kraftfahrzeug gemäß Anspruch 2, wobei die Keileinrichtung (45, 45') zwischen den Basisteil (42, 42') des Körpers (41, 41') und die untere Wand (21, 21') des Türrahmens eingesetzt wird.

4. Tür für ein Kraftfahrzeug gemäß Anspruch 2, wobei der Körper (41, 41') zumindest eine im Wesentlichen vertikale Fläche (43; 49) besitzt, die, um eine Nockenwirkung zu erzeugen, mit zumindest einer im Wesentlichen vertikalen Gegenfläche (23, 24; 25) zusammenwirken kann, die in der unteren Wand (21, 21') ausgebildet ist, wodurch eine Drehung des Körpers (41, 41') eine Auslenkbewegung der Schraube (36) entlang des Querschlitzes (22, 22') und damit eine Querbewegung des Fußes der Führung (30) hervorruft, wodurch die Neigung der Führung eingestellt wird.

5. Tür für ein Kraftfahrzeug gemäß Anspruch 4, wobei man den Türrahmen (20) in einem Spritzgussverfahren erhält, und wobei die zumindest eine im Wesentlichen vertikale Fläche (23, 24) von einer entsprechenden Ausformung gebildet wird, die von der unteren Wand (21) des Türrahmens nach unten vorspringt.

6. Tür für ein Kraftfahrzeug gemäß Anspruch 5, wobei die untere Wand (21) des Türrahmens (20) ein Paar von im Wesentlichen vertikalen Flächen (23, 24) an gegenüber liegenden Seiten relativ zum Querschlitz (22) bildet.

7. Tür für ein Kraftfahrzeug gemäß Anspruch 4, wobei der Körper (41, 41') eine Vielzahl von Randlaschen (43, 43') besitzt, die vom Basisteil (42, 42') nach unten vorspringen.

8. Tür für ein Kraftfahrzeug gemäß Anspruch 4, wobei der Körper (41, 41') in einem Stück mit einem Keilelement (45, 45') ausgebildet wird, das vom Körper (41) vorspringt und mit diesem über zumindest einen abbrechbaren Befestigungspunkt (45a) verbunden ist.

9. Tür für ein Kraftfahrzeug gemäß Anspruch 8, wobei der Befestigungspunkt (45a) den Körper (41) am dünneren Ende des Keilelements (45) verbindet.

10. Tür für ein Kraftfahrzeug gemäß Anspruch 4, wobei:
- der Türrahmen (20') aus Blech besteht;
- die zumindest eine im Wesentlichen vertikale Gegenfläche durch einen gebogenen Schlitz (25) dargestellt wird, der einen Krümmungsmittelpunkt oder Krümmungsmittelpunkte (C) besitzt, der/die außerhalb eines Querschlitzes (22') liegt/liegen; und
- die im Wesentlichen vertikale Fläche des Körpers (41') von einer Zapfenausformung (49) dargestellt wird, die in einem Abstand von der Durchgangsöffnung (44') liegt und verschiebbar in den gebogenen Schlitz (25) eingreifen kann.

11. Verfahren zum Einstellen und Fixieren der Neigung der Gleitführungen für eine Glasscheibe in der Tür für ein Kraftfahrzeug, wobei das Verfahren folgende Schritte enthält:
a) Vorsehen einer Tür mit einem Rahmen (20, 20'), der eine im Wesentlichen horizontale untere Wand (21, 21') mit einem im Wesentlichen quer verlaufenden Schlitz (22, 22') bildet;
b) Vorsehen eines Paars von parallelen Gleitführungen (30) für eine Glasscheibe (P), wobei der Fuß einer jeden Führung in einen Plattenteil (33) integriert ist, der zur unteren Wand (21, 21') des Türrahmens gerichtet ist, und wobei der Plattenteil eine Gewindemutter (35) trägt, die mit einer Öffnung (34) fluchtend ausgerichtet ist, die im Plattenteil (33) ausgebildet ist;
c) Einsetzen des Schafts (36a) einer Feststellschraube (36) durch den Schlitz (22, 22') und Verschrauben des Schafts in die Mutter (35), wobei der Kopf (36b) der Schraube unterhalb des Plattenteils (21, 21') angeordnet ist;
d) Bewegen der Schraube (36) quer entlang des Querschlitzes (22, 22'), um den Plattenteil (33) in eine ausgewählte Querstellung zu bringen, die der gewünschten Neigung der Führung (30) entspricht;
e) Pressen einer Keileinrichtung (45, 45') in eine Zwischenstellung zwischen dem Kopf (36b) der Schraube und der Mutter (35), um den Plattenteil (33) vorübergehend gegen die untere Wand (21, 21') in der ausgewählten Stellung zu verriegeln; und
f) Festziehen der Schraube (36) in der Mutter (35), um den Plattenteil (33) fest gegen die untere Wand (21, 21') in der ausgewählten Stellung zu verriegeln.

12. Verfahren gemäß Anspruch 11, wobei dem Schritt c) folgende Schritte vorangehen:
- Vorsehen eines Körpers (41, 41'), der einen Basisteil (42, 42') mit einer Durchgangsöffnung (44, 44') besitzt, die Abmessungen besitzt, die den Abmessungen des Querschnitts des Schafts (36a) der Schraube entsprechen;
- Einsetzen der Schraube in die Durchgangsöffnung (44, 44') des Basisteils (42, 42'); und
- Anordnen des Basisteils (42, 42') zwischen dem Kopf (36b) der Schraube (36) und der unteren Wand (21, 21') des Türrahmens.

13. Verfahren gemäß Anspruch 12, wobei das Verfahren weiters folgende Schritte enthält:
- Vorsehen im Körper (41, 41') von zumindest einer im Wesentlichen vertikalen Fläche (43; 49) in einem Abstand von der Durchgangsöffnung (44, 44');
- Vorsehen von zumindest einer im Wesentlichen vertikalen Gegenfläche (23, 24; 25) in der unteren Wand (21, 21') des Türrahmens (20, 20');
- Drehen in einer im Wesentlichen horizontalen Ebene des Körpers (41, 41'), wobei die zumindest eine im Wesentlichen vertikale Fläche (43, 49) des Körpers (41, 41') nockenartig mit der zumindest einen im Wesentlichen vertikalen Gegenfläche (23, 24; 25) der Tür zusammenwirkt, wodurch die Auslenkbewegung der Schraube (36) entlang des Querschlitzes (22, 22') und die Querbewegung des Fußes der Führung (30) hervorgerufen werden, wodurch die Neigung der Führung eingestellt wird.

14. Verfahren gemäß Anspruch 12, wobei das Verfahren weiters folgende Schritte enthält:
- Vorsehen der Keileinrichtung (45, 45'), die so ausgebildet ist, dass sie vom Körper vorspringt und mit diesem über zumindest einen Befestigungspunkt (45a) verbunden ist; und
- Biegen (A) der Keileinrichtung (45, 45') mit der Hand zum Basisteil (42, 42') des Körpers (41, 41') und Abbrechen des Befestigungspunkts (45a).

## Revendications

1. Porte de véhicule à moteur avec un système pour ajuster et fixer l'inclinaison des guides coulissants pour un panneau pour une vitre, la porte comprenant:
un châssis (20, 20') qui forme une paroi inférieure sensiblement horizontale (21, 21') avec une fente sensiblement transversale (22, 22');
une paire de guides coulissants parallèles (30) pour une vitre (P), dans laquelle le pied de chaque guide est solidaire d'une partie de plaque (33) faisant face à ladite paroi inférieure (21, 21') du châssis de porte et dans laquelle la partie de plaque supporte un écrou fileté (35) aligné avec un trou (34) formé dans ladite partie de plaque (33) ;
un boulon de serrage (36) ayant sa tige (36a) insérée à travers la fente (22, 22') et mise en prise dans l'écrou (35), la tête (36b) du boulon étant agencée au-dessous de la partie de plaque (21, 21') ;
**caractérisée par** :
des moyens de cale (45, 45') agissant entre la tête (36b) du boulon et l'écrou (35) pour bloquer la partie de plaque (33) temporairement contre ladite paroi inférieure (21, 21') dans une position sélectionnée qui correspond à l'inclinaison souhaitée du guide (30).

2. Porte de véhicule à moteur selon la revendication 1, dans laquelle les moyens de cale (45, 45') sont associés à un corps (41, 41') ayant une partie de base (42, 42') placée entre la tête (36b) du boulon (36) et la paroi inférieure (21, 21') du châssis de porte, dans laquelle la partie de base (42, 42') a un trou débouchant (44, 44') avec des dimensions correspondant à celles de la section transversale de la tige (36a) du boulon.

3. Porte de véhicule à moteur selon la revendication 2, dans laquelle les moyens de cale (45, 45') sont insérés entre ladite partie de base (42, 42') du corps (41, 41') et la paroi inférieure (21, 21') du châssis de porte.

4. Porte de véhicule à moteur selon la revendication 2, dans laquelle le corps (41, 41') a au moins une surface sensiblement verticale (43; 49) pouvant coopérer pour produire une action de came avec au moins une surface résistante sensiblement verticale (23, 24 ; 25) formée dans la paroi inférieure (21, 21'), moyennant quoi la rotation du corps (41, 41') provoque le mouvement de translation du boulon (36) le long de la fente transversale (22, 22') et par conséquent le mouvement transversal du pied du guide (30) avec l'ajustement successif de l'inclinaison du guide.

5. Porte de véhicule à moteur selon la revendication 4, dans laquelle le châssis de porte (20) est obtenu par moulage sous pression et ladite au moins une surface sensiblement verticale (23, 24) est présentée par une formation correspondante faisant saillie vers le bas à partir de la paroi inférieure (21) du châssis de porte.

6. Porte de véhicule à moteur selon la revendication 5, dans laquelle la paroi inférieure (21) du châssis de porte (20) forme une paire de surfaces sensiblement verticales (23, 24) sur les côtés opposés par rapport à la fente transversale (22).

7. Porte de véhicule à moteur selon la revendication 4, dans laquelle le corps (41, 41') a une pluralité de languettes périphériques (43, 43') faisant saillie vers le bas à partir de la partie de base (42, 42').

8. Porte de véhicule à moteur selon la revendication 4, dans laquelle le corps (41, 41') est formé d'un seul tenant avec un élément de cale (45, 45') faisant saillie à partir du corps (41) et assemblé à celui-ci au moyen d'au moins un point de fixation cassable (45a).

9. Porte de véhicule à moteur selon la revendication 8, dans laquelle le point de fixation (45a) assemble le corps (41) au niveau de l'extrémité plus fine de l'élément de cale (45).

10. Porte de véhicule à moteur selon la revendication 4, dans laquelle :
le châssis de porte (20') est réalisé à partir d'une tôle métallique;
ladite au moins une surface résistante sensiblement verticale est présentée avec une fente incurvée (25) ayant un centre ou des centres de courbure (c) qui tombe/tombent à l'extérieur d'une fente transversale (22'); et
la surface sensiblement verticale du corps (41') est présentée par une formation de broches (49) à une certaine distance du trou débouchant (44') et pouvant se mettre en prise de manière coulissante dans la fente incurvée (25).

11. Procédé pour ajuster et fixer l'inclinaison des guides coulissants pour une vitre dans la porte d'un véhicule à moteur, comprenant les étapes consistant à :
a) prévoir une porte avec un châssis (20, 20') qui forme une paroi inférieure sensiblement horizontale (21, 21') avec une fente sensiblement transversale (22, 22');
b) prévoir une paire de guides coulissants parallèles (30) pour une vitre (P), dans lequel le pied de chaque guide est solidaire d'une partie de plaque (33) faisant face à ladite paroi inférieure (21, 21') du châssis de porte et la partie de plaque supporte un écrou fileté (35) aligné avec un trou (34) formé dans la partie de plaque (33);
c) insérer la tige (36a) du boulon de serrage (36) à travers la fente (22, 22') et visser la tige dans l'écrou (35), la tête (36b) du boulon étant agencée au-dessous de la partie de plaque (21, 21');
d) déplacer le boulon (36) transversalement le long de la fente transversale (22, 22') pour amener la partie de plaque (33) dans une position transversale sélectionnée qui correspond à l'inclinaison souhaitée du guide (30) ;
e) comprimer des moyens de cale (45, 45') dans une position intermédiaire entre la tête (36b) du boulon et l'écrou (35) pour bloquer la partie de plaque (33) temporairement contre ladite paroi inférieure (21, 21') dans ladite position sélectionnée; et
f) serrer le boulon (36) dans l'écrou (35) pour bloquer la partie de plaque (33) fermement contre ladite paroi inférieure (21, 21') dans ladite position sélectionnée.

12. Procédé selon la revendication 11, dans lequel l'étape c) est précédée par les étapes consistant à :
prévoir un corps (41, 41') ayant une partie de base (42, 42') avec un trou débouchant (44, 44') avec des dimensions correspondant à celles de la section transversale de la tige (36a) du boulon;
insérer le boulon dans le trou débouchant (44, 44') de la partie de base (42, 42'); et
placer la partie de base (42, 42') entre la tête (36b) du boulon (36) et la paroi inférieure (21, 21') du châssis de porte.

13. Procédé selon la revendication 12, comprenant en outre les étapes consistant à :
prévoir dans le corps (41, 41') au moins une surface sensiblement verticale (43; 49) à une certaine distance du trou débouchant (44, 44');
prévoir au moins une surface résistante sensiblement verticale (23, 24 ; 25) dans la paroi inférieure (21, 21') du châssis de porte (20, 20');
faire tourner dans un plan sensiblement horizontal le corps (41, 41') moyennant quoi ladite au moins une surface sensiblement verticale (43, 49) du corps (41, 41') coopère selon une relation de came avec ladite au moins une surface résistante sensiblement verticale (23, 24; 25) de la porte provoquant ledit mouvement de translation du boulon (36) le long de la fente transversale (22, 22') et ledit mouvement transversal du pied du guide (30) avec l'ajustement successif de l'inclinaison du guide.

14. Procédé selon la revendication 12, comprenant en outre les étapes consistant à :
prévoir les moyens de cale (45, 45') formés pour faire saillie à partir du corps et l'assembler par au moins un point de fixation (45a) ; et
plier manuellement (A) les moyens de cale (45, 45') vers la partie de base (42, 42') du corps (41, 41') et détacher ledit point de fixation (45a).
